# EUROPÄISCHE PATENTSCHRIFT

(11) **EP 3 381 262 B1**
(45) Veröffentlichungstag und Bekanntmachung des Hinweises auf die Patenterteilung: **03.06.2020**
(21) Anmeldenummer: 18152441.4
(22) Anmeldetag: 19.01.2018
(51) Int. Cl.: A01D 41/127, A01D 43/08, A01D 75/20

(54) **VERFAHREN ZUM BETREIBEN EINER LANDWIRTSCHAFTLICHEN ERNTEMASCHINE**
METHOD FOR OPERATING AN AGRICULTURAL HARVESTER
PROCÉDÉ DE FONCTIONNEMENT D'UNE MACHINE DE RÉCOLTE AGRICOLE

(30) Priorität: 28.03.2017 DE 102017106636
(43) Veröffentlichungstag der Anmeldung: 03.10.2018
(73) Patentinhaber: CLAAS Selbstfahrende Erntemaschinen GmbH, 33428 Harsewinkel (DE)
(72) Erfinder: Pollklas, Manfred, 33378 Rheda-Wiedenbrück (DE)
(74) Vertreter: CLAAS Gruppe

(56) Entgegenhaltungen:
- EP-A1- 1 275 290
- CN-C- 100 415 075
- DE-A1- 10 243 527
- DE-A1-102004 013 287

## Beschreibung

Die vorliegende Erfindung betrifft ein Verfahren zum Betreiben einer landwirtschaftlichen Erntemaschine gemäß dem Oberbegriff des Anspruches 1 sowie eine Steuerungseinrichtung gemäß dem Anspruch 10 und eine landwirtschaftliche Erntemaschine gemäß dem Anspruch 11.

Landwirtschaftliche Erntemaschinen weisen einen Antriebsmotor auf, der von einer Steuerungseinrichtung angesteuert wird. Zur Übertragung einer Antriebsdrehzahl wird der Antriebsmotor durch eine schaltbare Kupplung mit einem Hauptantriebsstrang trieblich verbunden. Durch den Hauptantriebsstrang wird zumindest ein Arbeitsaggregat der Erntemaschine angetrieben. Bei landwirtschaftlichen Erntemaschinen, die ein als Zerkleinerungsaggregat ausgeführtes Arbeitsaggregat aufweisen, ist es inzwischen üblich, bei einem durch eine Bedienperson initiiertes Abschalten des Zerkleinerungsaggregates ein Abbremsen durch mit dem Zerkleinerungsaggregat verbundene Bremsvorrichtung vorzusehen, um aus Sicherheitsgründen die Dauer des Nachlaufens der rotierenden Elemente des Zerkleinerungsaggregat möglichst gering zu halten. Das Abschalten des Zerkleinerungsaggregates erfolgt dadurch, dass von einer Steuerungseinrichtung eine schaltbare Kupplung angesteuert wird, durch welche ein Antriebsmotor mit einem Hauptantriebsstrang zur Übertragung einer Antriebsdrehzahl trieblich verbunden wird

Darüber hinaus ist eine automatische Abschaltung des Zerkleinerungsaggregates der Erntemaschine vorgesehen, um die Betriebssicherheit weiter zu erhöhen. Hierzu wird das Verlassen der Erntemaschine durch eine Bedienperson sensorisch erfasst, beispielsweise durch einen Sitzschalter. Löst der Sitzschalter ein Signal aus, welches für die Abwesenheit der Bedienperson steht, wir automatisch die Abschaltung des Zerkleinerungsaggregat durch das Abschalten des Hauptantriebsstranges der Erntemaschine eingeleitet.

Ein solches Verfahren zum Betreiben einer landwirtschaftlichen Erntemaschine ist aus der DE 102 43 527 A1 bekannt. Nachteilig an dem Verfahren ist, dass aufgrund der Häufigkeit der automatisierten Abschaltungen der Verschleiß der Komponenten der Erntemaschine zunimmt.

Somit ist es die Aufgabe der vorliegenden Erfindung, ein Verfahren zum Betreiben einer landwirtschaftlichen Erntemaschine bereitzustellen, welches einen verschleißärmeren Betrieb ermöglicht.

Diese Aufgabe wird durch ein Verfahren gemäß den Merkmalen des Anspruchs 1 gelöst.

Vorteilhafte Weiterbildungen sind Gegenstand der Unteransprüche.

Gemäß dem Anspruch 1 wird ein Verfahren zum Betreiben einer landwirtschaftlichen Erntemaschine vorgeschlagen, welche einen Antriebsmotor aufweist, der von einer Steuerungseinrichtung angesteuert wird. Zur Übertragung einer Antriebsdrehzahl wird der Antriebsmotor durch eine schaltbare Kupplung mit einem Hauptantriebsstrang trieblich verbunden. Durch den Hauptantriebsstrang wird zumindest ein rotierendes Arbeitsaggregat der Erntemaschine angetrieben.

Erfindungsgemäß ist vorgesehen, dass vor dem Schalten der Kupplung eine automatische Absenkung der Antriebsdrehzahl des Antriebsmotors auf eine den Betrieb der Erntemaschine gewährleistende Grenzdrehzahl eingeleitet wird. Das automatische Absenken der Antriebsdrehzahl auf die Grenzdrehzahl vor dem Schalten hat den Vorteil, dass die Schaltvorgänge verschleißärmer durchgeführt werden. Im Fall des Einschaltens des Hauptantriebsstrangs führt eine vorherige automatische Absenkung der Antriebsdrehzahl auf die Grenzdrehzahl dazu, dass der Vorgang bei erheblich geringeren Antriebsleistungen durchgeführt wird. Dies ist insbesondere bei als Riementrieb ausgeführtem Hauptantriebsstrang, wie es bei landwirtschaftlichen Erntemaschinen üblich ist, vorteilhaft. Im Fall des Abschaltens des Hauptantriebsstrangs führt eine vorherige automatische Absenkung der Antriebsdrehzahl auf die Grenzdrehzahl dazu, dass ein dabei entstehendes Bremsmoment des Antriebsmotors auf den Hauptantriebsstrang und damit auch auf das zumindest eine von dem Hauptantriebsstrang angetriebene Arbeitsaggregat bremsend auswirkt.

Vorteilhaft ist es, wenn die automatische Reduzierung der Antriebsdrehzahl durch das Auslösen eines den Betrieb der Erntemaschine beeinflussenden Ereignisses eingeleitet wird. Als ein den Betrieb der Erntemaschine beeinflussendes Ereignis kann ein Wechsel eines Betriebsmodus von "Straßenfahrt" in "Feldfahrt" durch die Betätigung eines Schaltelementes angesehen werden. Ebenso ist darunter ein manuelles Ein- oder Ausschalten des Hauptantriebsstrangs durch eine Bedienperson zu verstehen, wie auch eine automatische Sicherheitsabschaltung des zumindest einen Arbeitsaggregates.

Insbesondere kann die automatische Reduzierung der Antriebsdrehzahl des Antriebsmotors in Abhängigkeit von einer im Zeitpunkt des auslösenden Ereignisses sensorisch erfassten Antriebsdrehzahl eingeleitet werden. So kann von der Art des den Betrieb der Erntemaschine beeinflussenden Ereignisses und der im Zeitpunkt des Auftretens des Ereignisses erfassten Moordrehzahl die Dauer der Durchführung der automatischen Drehzahlabsenkung angepasst werden. Beim Einschalten des Hauptantriebsstrangs bei hoher Motordrehzahl steht für die Absenkung der Antriebsdrehzahl auf die Grenzdrehzahl ein längerer Zeitraum zur Verfügung, als dass dies bei einer automatischen Abschaltung des Hauptantriebs aus Sicherheitsgründen der Fall ist. Das Zeitfenster für die Drehzahlabsenkung ist bei einer automatischen Abschaltung ist deutlich kleiner.

Dazu wird das Schalten der Kupplung zeitlich versetzt zu der Reduzierung der Antriebsdrehzahl durchgeführt.

Des Weiteren können zur Erkennung eines den Betrieb der Erntemaschine beeinflussenden Ereignisses die Signale zumindest eines Sicherheitssensors erfasst werden. Der Sicherheitssensor kann hierzu beispielsweise als ein Sitzschalter im Fahrersitz oder als eine Lichtschranke im Ausstiegsbereich ausgeführt sein. Mittels des Sicherheitssensors soll gewährleistet werden, dass sich eine Bedienperson in der Kabine der Erntemaschine befindet, wenn der Hauptantriebsstrang eingeschaltet ist.

Insbesondere kann als Arbeitsaggregat ein Zerkleinerungsaggregat von dem Hauptantriebsstrang angetrieben wird. Zerkleinerungsaggregate finden sich insbesondere an als Feldhäckslern oder Mähdreschern ausgeführten Erntemaschinen, und dienen der Zerkleinerung von Erntegut. Dies wirkt sich verschleißmindernd auf eine an dem Zerkleinerungsaggregat vorgesehene Bremsvorrichtung aus, da eine geringere Bremsleistung vonnöten ist, um das Zerkleinerungsaggregat zum Stillstand zu bringen. Zudem lässt sich die Bremsdauer reduzieren, wodurch eine zusätzliche Sicherheit erreicht wird.

Hierbei sollte die Reduzierung der Antriebsdrehzahl vor einem Abschalten des Hauptantriebs durch das Schalten der Kupplung angesteuert werden. Das Zeitfenster zwischen dem Erkennen einer Sicherheitsabschaltung, wenn das Verlassen der Kabine der Erntemaschine erkannt wurde, lässt sich somit effektiv nutzen.

Bevorzugt kann ein als Sitzschalter ausgeführt Sicherheitsschalter von der Steuerungseinrichtung überwacht werden.

Vorteilhaft ist es, wenn die Grenzdrehzahl in Abhängigkeit von Parameter bestimmt wird, die den jeweiligen Betriebszustand der Erntemaschine im Zeitpunkt der Ansteuerung durch die Steuerungseinrichtung repräsentieren. Die Bestimmung der Grenzdrehzahl in Abhängigkeit vom jeweils aktuellen Betriebszustand soll gewährleisten, dass trotz einer Absenkung der Antriebsdrehzahl, die Abschaltung und das Abbremsen des Zerkleinerungsaggregates bis zu dessen Stillstand erfolgen.

Weiterhin betrifft die Erfindung eine Steuerungseinrichtung für eine landwirtschaftliche Erntemaschine, die zur Durchführung des Verfahrens nach einem der Ansprüche 1 bis 9 eingerichtet ist.

Zudem hat die vorliegende Erfindung eine landwirtschaftliche Erntemaschine zum Gegenstand, umfassend einen von einer Steuerungseinrichtung angesteuerten Antriebsmotor, der durch eine lösbare Kupplung mit einem Hauptantriebsstrang zur Übertragung einer Antriebsdrehzahl trieblich verbindbar ist, wobei durch den Hauptantriebsstrang zumindest ein Arbeitsaggregat der Erntemaschine antreibbar ist, wobei die Steuerungseinrichtung dazu eingerichtet ist, ein den Betrieb der Erntemaschine beeinflussendes Ereignis zu erkennen, um vor dem Schalten der Kupplung eine automatische Reduzierung der Antriebsdrehzahl des Antriebsmotors auf eine den Betrieb der Erntemaschine gewährleistende Grenzdrehzahl einzuleiten.

Die vorliegende Erfindung wird nachstehend anhand von in den Zeichnungen dargestellten Ausführungsbeispielen näher erläutert.

Die Darstellung in der Fig. zeigt eine landwirtschaftliche Erntemaschine in Form eines selbstfahrenden Feldhäckslers 1 in schematischer Seitenansicht von links. Der Feldhäcksler 1 ist auf für sich bekannte Weise (daher nicht näher bezeichnet) mit einem Paar angetriebener Vorder- und lenkbarer Hinterräder ausgestattet, sowie mit einem Erntevorsatzgerät und einem diesem nachgelagerten Einzugs- und Vorpressaggregat. Bei der Erntefahrt über das Feld in angezeigter Vorwärtsfahrtrichtung FR wird Erntegut durch das Einzugs- und Vorpressaggregat einer rotierenden Häckseltrommel 2 zugeführt und dort in Zusammenwirkung mit einer stehenden Gegenschneide zerkleinert, insbesondere gehäckselt. Das Erntegut durchläuft als kontinuierlicher Erntegutstrom anschließend eine optional in den Feldhäcksler 1 einbaubare Konditioniereinrichtung 3, die mittels zweier gegenläufig angetriebener Cracker-Walzen ein Aufschließen von im Erntegut enthaltenen Maiskörnern bewirkt.

Auf zunächst für sich bekannte Weise ist den gutbearbeitenden Arbeitsaggregaten 2, 3 ein Auswurfbeschleuniger 4 nachgeordnet, der zur Beschleunigung des bearbeiteten Ernteguts dient, um dieses nach Durchlaufen eines angrenzenden Förderschachts 12 durch eine Überladeeinrichtung in Form eines Auswurfkrümmers 16 aus dem Feldhäcksler 1 auszuwerfen.

Der Feldhäcksler 1 verfügt über einen heckseitig angeordneten Antriebsmotor 6. Dieser überträgt einen Teil seiner Antriebsleistung mittels eines Hauptantriebsriemens 7 an die Häckseltrommel 2 sowie an den Auswurfbeschleuniger 4. Eine durch den Auswurfbeschleuniger 4 verlaufende Welle 8 ist dazu einen Endes mit einem in dieser Ansicht sichtbaren Antriebsrad 14 versehen, das teilweise vom Hauptantriebsriemen 7 umschlungen ist, um so durch den Hauptantriebsriemen 7 vom Antriebsmotor 6 antreibbar zu sein. Der Antriebsmotor 6 und der Hauptantriebsriemen 7 sind durch eine schaltbare Kupplung trieblich miteinander verbunden.

Weiterhin weist der Feldhäcksler 1 eine Kabine 10 mit einem Fahrersitz 11 sowie eine Ein-Ausgabeeinheit 9 mit einem Straßenfahrschalter 15 auf. In dem Fahrersitz 11 ist ein Sensor 17 angeordnet, der erfasst, ob der Fahrersitz 11 von einer Bedienperson besetzt ist. Es sind auch alternative Vorrichtungen denkbar, welche die Anwesenheit einer Bedienperson in der Kabine 10 erfassen. So könnte zur Erfassung der Anwesenheit eine Kamera oder eine Lichtschranke vorgesehen sein. Eine Steuerungseinrichtung 5 ist mit der Ein-Ausgabeeinheit 9 sowie dem Sensor 17 signaltechnisch verbunden. Die Steuerungseinrichtung 5 ist zur Überwachung und Ansteuerung des Antriebsmotors 6, sowie der Arbeitsaggregate eingerichtet ist. Hierzu wird eine von dem Antriebsmotor 6 bereitgestellte Antriebsdrehzahl mittels eines Drehzahlsensors 18 kontinuierlich erfasst. Die von dem Sensor 17 sowie dem Drehzahlsensor 18 erfassten Werte werden an die Steuerungseinrichtung 5 zur Auswertung übertragen.

Die Ein-Ausgabeeinheit 9 weist einen, insbesondere berührungsempfindlichen, Bildschirm sowie ein oder mehrere Schaltelemente auf. Ein Schaltelement ist als sogenannter Straßenfahrschalter 15 ausgeführt, der zwei unterschiedliche Schaltstellung aufweist. In einer ersten Schaltstellung, die als "Straßenfahrt" bezeichnet wird, sind der die Arbeitsaggregate des Feldhäckslers 1 antreibende Hauptantriebsriemen 7 und der Antriebsmotor 6 durch eine entsprechende Ansteuerung der Kupplung durch die Steuerungseinrichtung 5 trieblich voneinander getrennt. Hingegen sind in einer zweiten Schaltstellung, die als "Feldfahrt" bezeichnet wird, der die Arbeitsaggregate des Feldhäckslers 1 antreibende Hauptantriebsriemen 7 und der Antriebsmotor 6 durch eine entsprechende Ansteuerung der Kupplung durch die Steuerungseinrichtung 5 trieblich miteinander verbunden.

Um die Sicherheit beim Betreiben des Feldhäckslers 1 zu erhöhen, ist vorgesehen, dass, nachdem ein Signal zum Abschalten der Häckseltrommel 2 an die Steuerungseinrichtung 5 gesandt wurde, die Häckseltrommel 2 aktiv durch eine Bremsvorrichtung abgebremst wird. Dies dient dazu, die Dauer des Nachlaufens der im Betrieb mit hoher Drehzahl rotierenden Häckseltrommel 2 zu reduzieren, um eine Gefährdung der Bedienperson zu verhindern.

Das Abschalten der Häckseltrommel 2 wird dabei in der Regel durch einen gezielten Bedieneingriff einer Bedienperson, die den Feldhäcksler 1 bedient, initiiert. Hierbei stellt das Abschalten der Häckseltrommel 2 das Auslösen eines den Betrieb des Feldhäckslers 1 beeinflussenden Ereignisses dar. Darüber hinaus ist es zur Erhöhung der Betriebssicherheit vorgesehen, mittels des im Fahrersitz 11 angeordneten Sensors 17 oder einer alternativen Sensorik in der Kabine 10 das Verlassen des Fahrersitzes 11 durch die Bedienperson zu erfassen. Das Verlassen des Fahrersitzes 11 führt zu einer automatischen Abschaltung der Häckseltrommel 2. Dadurch soll verhindert werden, dass die Häckseltrommel 2 unbeaufsichtigt in Betrieb ist. Hierzu wird der Hauptantriebsriemen 7 durch das Schalten der Kupplung von dem Antriebsmotor 6 trieblich getrennt. Das Einleiten der automatischen Abschaltung nach Erfassen der Abwesenheit der Bedienperson erfolgt dabei zeitverzögert.

Das Abschalten der Häckseltrommel 2 erfolgt wegen der zusätzlichen Überwachung der Anwesenheit der Bedienperson häufiger, als es im regulären Betrieb des Feldhäckslers 1 durch die Bedienperson selbst initiiert wird. Dies führt zu einem erhöhten Verschleiß einer Bremsvorrichtung der Häckseltrommel 2. Insbesondere nimmt der Verschleiß signifikant zu, wenn ein Abschalten und Abbremsen bei voller Betriebsdrehzahl der Häckseltrommel 2 erfolgt.

Um dem erhöhten Verschleiß der Bremsvorrichtung entgegenzuwirken, wird das Auslösen eines den Betrieb der Erntemaschine beeinflussenden Ereignisses, wie das Abschalten der Häckseltrommel 2, von der Steuerungseinrichtung 5 erfasst. Dabei kann das Abschalten auf den Eingriff der Bedienperson oder das Ansprechen des Sensors 17 zurückzuführen sein.

Wird durch die Steuerungseinrichtung 5 ein den Betrieb der Erntemaschine beeinflussendes Ereignis erfasst, wird in einem ersten Schritt die Antriebsdrehzahl des Antriebsmotors 6 durch die automatische Ansteuerung durch die Steuerungseinrichtung 5 auf eine Grenzdrehzahl n_{Grenz} abgesenkt. Die Grenzdrehzahl n_{Grenz} ist variabel und wird von der Steuerungseinrichtung 5 bestimmt bzw. festgelegt. Der Wert der Grenzdrehzahl n_{Grenz} wird von der Steuerungseinrichtung 5 in der Weise bestimmt, dass der laufende Betrieb des Feldhäckslers 1 durch den Antriebsmotor 6 bei Erreichen der Grenzdrehzahl n_{Grenz} aufrechterhalten wird. Hierzu kann die Grenzdrehzahl n_{Grenz} von der Steuerungseinrichtung 5 in Abhängigkeit von Parametern bestimmt werden, die den Betriebszustand des Feldhäckslers 1 vor der Ansteuerung des Antriebsmotors 6 repräsentieren. Das automatische Absenken der Antriebsdrehzahl des Antriebsmotors 6 führt dazu, dass durch den Hauptantriebsriemen 7 zunächst das Bremsmoment des Antriebsmotors 6 auf die Häckseltrommel 6 überragen wird.

Das bei der Drehzahlabsenkung auftretende Bremsmoment des Antriebsmotors 6 wird gezielt zur Abbremsung der Häckseltrommel 2 eingesetzt. Dies hat den Vorteil, dass im Zeitpunkt der Abschaltung der Häckseltrommel 2 durch das Ansteuerung der Kupplung zum Trennen des Hauptantriebsriemens 7 vom Antriebsmotor 6 die Drehzahl der Häckseltrommel 2 bereits reduziert wurde. Zum anschließenden Abbremsen der Häckseltrommel 2 durch die Bremsvorrichtung ist eine geringere Bremsleistung erforderlich, was sich verschleißmindernd auswirkt. Zudem kommt die Häckseltrommel 2 früher zum Stillstand, was zu einer Erhöhung der Betriebssicherheit beiträgt. Wie weiter oben ausgeführt, erfolgt das Einleiten der automatischen Abschaltung zeitverzögert. Innerhalb des Zeitintervalls zwischen dem Erfassen der Abwesenheit und dem Abschalten der Häckseltrommel 2 wird die automatische Drehzahlabsenkung durch die Steuerungseinrichtung 5 eingeleitet und überwacht.

Ein weiterer Aspekt dieser von einem den Betrieb des Feldhäckslers 1 beeinflussenden Ereignis abhängigen Ansteuerung des Antriebsmotors 6 besteht darin, dass vor einem Schalten der Kupplung zum trieblichen Verbinden mit dem Hauptantriebsriemen 7 ebenfalls automatische eine Drehzahlabsenkung des Antriebsmotors 6 angesteuert wird. Hierbei wird durch die Steuerungsvorrichtung 5 das Betätigen des Straßenfahrschalters 15 erfasst. Bei einem Umschalten des Straßenfahrschalters 15 aus der Schaltstellung "Straßenfahrt" in "Feldfahrt" wird der Hauptantriebsriemen 7 durch das Ansteuern der Kupplung mit dem Antriebsmotor 6 trieblich verbunden. Dem geht die Ansteuerung des Antriebsmotors 6 durch die Steuerungseinrichtung 5 voran, welche die automatische Absenkung der von dem Drehzahlsensor 18 erfassten aktuellen Antriebsdrehzahl auf die Grenzdrehzahl n_{Grenz} einleitet. Mit dem Erreichen der von der Steuerungseinrichtung 5 bestimmten Grenzdrehzahl n_{Grenz} wird die Kupplung angesteuert, um den Antriebsmotor 6 mit dem Hauptantriebsriemen 7 trieblich zu verbinden.

### Bezugszeichenliste

- 1: Feldhäcksler
- 2: Häckseltrommel
- 3: Konditioniereinrichtung
- 4: Auswurfbeschleuniger
- 5: Steuerungseinrichtung
- 6: Antriebsmotor
- 7: Hauptantriebsriemen
- 8: Welle
- 9: Ein-Ausgabeeinheit
- 10: Kabine
- 11: Fahrersitz
- 12: Förderschacht
- 13: Lichtschranke
- 14: Antriebsrad
- 15: Straßenfahrschalter
- 16: Auswurfkrümmer
- 17: Sensor
- 18: Drehzahlsensor

- FR: Vorwärtsfahrtrichtung
- n_{Grenz}: Grenzdrehzahl

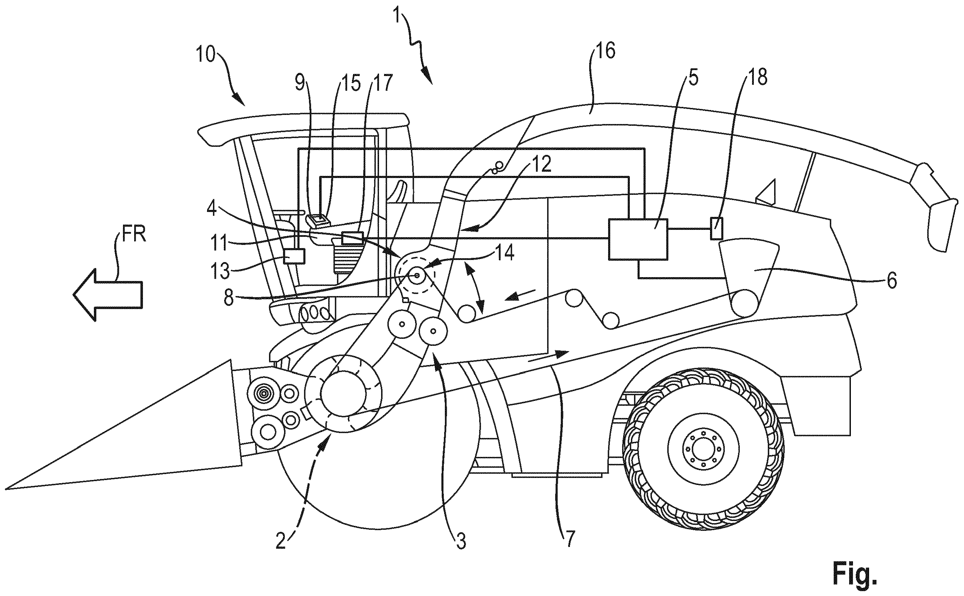

## Patentansprüche

1. Verfahren zum Betreiben einer landwirtschaftlichen Erntemaschine (1), welche einen Antriebsmotor (6) aufweist, der von einer Steuerungseinrichtung (5) angesteuert und der durch eine schaltbare Kupplung mit einem Hauptantriebsstrang (7) zur Übertragung einer Antriebsdrehzahl betrieblich verbunden wird, durch den zumindest ein Arbeitsaggregat (2) der Erntemaschine (1) angetrieben wird, **dadurch gekennzeichnet, dass** vordem Schalten der Kupplung eine automatische Absenkung der Antriebsdrehzahl des Antriebsmotors (6) auf eine den Betrieb der Erntemaschine (1) gewährleistende Grenzdrehzahl (n_{Grenz}) eingeleitet wird.

2. Verfahren nach Anspruch 1, **dadurch gekennzeichnet, dass** die automatische Reduzierung der Antriebsdrehzahl durch das Auslösen eines den Betrieb der Erntemaschine (1) beeinflussenden Ereignisses eingeleitet wird.

3. Verfahren nach Anspruch 2, **dadurch gekennzeichnet, dass** die automatische Reduzierung der Antriebsdrehzahl des Antriebsmotors (6) in Abhängigkeit von einer im Zeitpunkt des auslösenden Ereignisses sensorisch erfassten Antriebsdrehzahl eingeleitet wird.

4. Verfahren nach einem der vorangehenden Ansprüche, **dadurch gekennzeichnet, dass** das Schalten der Kupplung zeitlich versetzt zu der Reduzierung der Antriebsdrehzahl durchgeführt wird.

5. Verfahren nach einem der vorangehenden Ansprüche, **dadurch gekennzeichnet, dass** zur Erkennung eines den Betrieb der Erntemaschine (1) beeinflussenden Ereignisses die Signale zumindest eines Sicherheitssensors (13, 17) erfasst werden.

6. Verfahren nach einem der vorangehenden Ansprüche, **dadurch gekennzeichnet, dass** als Arbeitsaggregat ein Zerkleinerungsaggregat (2) von dem Hauptantriebsstrang (7) angetrieben wird.

7. Verfahren nach einem der vorangehenden Ansprüche, **dadurch gekennzeichnet, dass** die Reduzierung der Antriebsdrehzahl vor einem Abschalten des Hauptantriebstrangs (7) durch das Schalten der Kupplung angesteuert wird.

8. Verfahren nach einem der vorangehenden Ansprüche, **dadurch gekennzeichnet, dass** ein als Sitzschalter (17) ausgeführt Sicherheitsschalter von der Steuerungseinrichtung (5) überwacht wird.

9. Verfahren nach einem der vorangehenden Ansprüche, **dadurch gekennzeichnet, dass** die Grenzdrehzahl (n_{Grenz}) in Abhängigkeit von Parametern bestimmt wird, die den jeweiligen Betriebszustand der Erntemaschine (1) im Zeitpunkt der Ansteuerung durch die Steuerungseinrichtung (5) repräsentieren.

10. Steuerungseinrichtung (5) für eine landwirtschaftliche Erntemaschine (1), die zur Durchführung des Verfahrens nach einem der vorangehenden Ansprüche eingerichtet ist.

11. Landwirtschaftliche Erntemaschine (1), umfassend einen von einer Steuerungseinrichtung (5) angesteuerten Antriebsmotor (6), der durch eine lösbare Kupplung mit einem Hauptantriebsstrang (7) zur Übertragung einer Antriebsdrehzahl trieblich verbindbar ist, wobei durch den Hauptantriebsstrang (7) zumindest ein Arbeitsaggregat (2) der Erntemaschine (1) antreibbar ist, **dadurch gekennzeichnet, dass** die Steuerungseinrichtung (5) dazu eingerichtet ist, ein den Betrieb der Erntemaschine (1) beeinflussendes Ereignis zu erkennen, um vor dem Schalten der Kupplung eine automatische Reduzierung der Antriebsdrehzahl des Antriebsmotors (6) auf eine den Betrieb der Erntemaschine (1) gewährleistende Grenzdrehzahl (n_{Grenz}) einzuleiten.

## Claims

1. A method of operating an agricultural harvester (1) having a drive motor (6) which is controlled by a control device (5) and which is operatively connected by a switchable clutch to a main drive train (7) for transmitting a drive speed, by which at least one working assembly (2) of the harvester (1) is driven, **characterised in that** before switching of the clutch an automatic reduction in the drive speed of the drive motor (6) to a limit speed (n_{Grenz}) which ensures operation of the harvester (1) is initiated.

2. A method according to claim 1 **characterised in that** the automatic reduction in the drive speed is initiated by triggering of an event which influences operation of the harvester (1).

3. A method according to claim 2 **characterised in that** the automatic reduction in the drive speed of the drive motor (6) is initiated in dependence on a drive speed detected by sensor means at the time of the triggering event.

4. A method according to one of the preceding claims **characterised in that** switching of the clutch is carried out in time-displaced relationship with the reduction in the drive speed.

5. A method according to one of the preceding claims **characterised in that** the signals of at least one safety sensor (13, 17) are detected in order to recognise an event which influences operation of the harvester (1).

6. A method according to one of the preceding claims **characterised in that** a comminuting assembly (2) is driven by the main drive train (7) as the working assembly.

7. A method according to one of the preceding claims **characterised in that** the reduction in the drive speed is implemented by switching of the clutch before the main drive train (7) is switched off.

8. A method according to one of the preceding claims **characterised in that** a safety switch in the form of a seat switch (17) is monitored by the control device (5).

9. A method according to one of the preceding claims **characterised in that** the limit speed (n_{Grenz}) is determined in dependence on parameters which represent the respective operating state of the harvester (1) at the time of control by the control device (5).

10. A control device (5) for an agricultural harvester (1), which is adapted to carry out the method according to one of the preceding claims.

11. An agricultural harvester (1) comprising a drive motor (6) which is controlled by a control device (5) and which can be connected to a main drive train (7) for the transmission of a drive speed by means of a disengageable clutch, wherein at least one working assembly (2) of the harvester (1) is drivable by the main drive train (7), **characterised in that** the control device (5) is adapted to recognise an event which influences operation of the harvester (1) in order before switching of the clutch to initiate an automatic reduction in the drive speed of the drive motor (6) to a limit speed (n_{Grenz}) which ensures operation of the harvester (1).

## Revendications

1. Procédé de fonctionnement d'une machine agricole de récolte (1), laquelle comporte un moteur d'entraînement (6) qui est commandé par un équipement de commande (5) et qui, par l'intermédiaire d'un accouplement temporaire, est relié de manière opérationnelle à une chaîne de transmission principale (7) pour transmettre une vitesse de rotation d'entraînement, par l'intermédiaire de laquelle au moins un organe de travail (2) de la machine de récolte (1) est entraîné, **caractérisé en ce que**, avant l'activation de l'accouplement, un abaissement automatique de la vitesse de rotation d'entraînement du moteur d'entraînement (6) à une vitesse de rotation limite (n_{Grenz}) garantissant le fonctionnement de la machine de récolte (1) est mis en œuvre.

2. Procédé selon la revendication 1, **caractérisé en ce que** la réduction automatique de la vitesse de rotation d'entraînement est mise en œuvre par le déclenchement d'un événement influençant le fonctionnement de la machine de récolte (1).

3. Procédé selon la revendication 2, **caractérisé en ce que** la réduction automatique de la vitesse de rotation d'entraînement du moteur d'entraînement (6) est mise en œuvre en fonction d'une vitesse de rotation d'entraînement détectée au moyen de capteurs au moment de l'événement déclenchant.

4. Procédé selon une des revendications précédentes, **caractérisé en ce que** l'activation de l'accouplement est réalisée avec un décalage temporel par rapport à la réduction de la vitesse de rotation d'entraînement.

5. Procédé selon une des revendications précédentes, **caractérisé en ce que**, pour détecter un événement influençant le fonctionnement de la machine de récolte (1), les signaux d'au moins un capteur de sécurité (13, 17) sont détectés.

6. Procédé selon une des revendications précédentes, **caractérisé en ce que** l'organe de travail entraîné par la chaîne de transmission principale (7) est un organe de broyage (2).

7. Procédé selon une des revendications précédentes, **caractérisé en ce que** la réduction de la vitesse de rotation d'entraînement est amorcée avant une désactivation de la chaîne de transmission principale (7) par activation de l'accouplement.

8. Procédé selon une des revendications précédentes, **caractérisé en ce qu'**un contacteur de sécurité conformé en contacteur de siège (17) est surveillé par l'équipement de commande (5).

9. Procédé selon une des revendications précédentes, **caractérisé en ce que** la vitesse de rotation limite (n_{Grenz}) est déterminée en fonction de paramètres qui représentent l'état de fonctionnement respectif de la machine de récolte (1) au moment de la commande par l'équipement de commande (5).

10. Équipement de commande (5) pour une machine agricole de récolte (1), lequel est agencé pour réaliser le procédé selon une des revendications précédentes.

11. Machine agricole de récolte (1), incluant un moteur d'entraînement (6) qui est commandé par un équipement de commande (5) et qui, par l'intermédiaire d'un accouplement débrayable, peut être relié de manière motrice à une chaîne de transmission principale (7) pour transmettre une vitesse de rotation d'entraînement, au moins un organe de travail (2) de la machine de récolte (1) pouvant être entraîné par l'intermédiaire de la chaîne de transmission principale (7), **caractérisée en ce que** l'équipement de commande (5) est agencé pour détecter un événement influençant le fonctionnement de la machine de récolte (1) afin de mettre en œuvre, avant l'activation de l'accouplement, une réduction automatique de la vitesse de rotation d'entraînement du moteur d'entraînement (6) à une vitesse de rotation limite (n_{Grenz}) garantissant le fonctionnement de la machine de récolte (1).
